# EUROPÄISCHE PATENTSCHRIFT

(11) **EP 3 500 092 B1**
(45) Veröffentlichungstag und Bekanntmachung des Hinweises auf die Patenterteilung: **04.09.2024**
(21) Anmeldenummer: 17745157.2
(22) Anmeldetag: 20.07.2017
(51) Int. Cl.: A01J 5/08

(54) **MODULARES MELKBECHERHÜLSENSYSTEM**
MODULAR TEAT CUP SHELL SYSTEM
SYSTÈME MODULAIRE DE GOBELET TRAYEUR

(30) Priorität: 19.08.2016 DE 102016215633
(43) Veröffentlichungstag der Anmeldung: 26.06.2019
(73) Patentinhaber: Maier, Jakob, 86842 Türkheim (DE); Hatzack, Wilfried, 86842 Türkheim (DE)
(72) Erfinder: Maier, Jakob, 86842 Türkheim (DE); Hatzack, Wilfried, 86842 Türkheim (DE)
(74) Vertreter: Grünecker Patent- und Rechtsanwälte PartG mbB
(86) Internationale Anmeldenummer: PCT/EP2017/068325
(87) Internationale Veröffentlichungsnummer: WO 2018/033338

(56) Entgegenhaltungen:
- EP-A1- 1 806 050
- EP-B1- 1 239 726
- WO-A1-2007/031783
- US-A- 4 269 143

## Beschreibung

Die vorliegende Erfindung betrifft allgemein das Gebiet der Melktechnik und insbesondere Melkbecher, die zum Milchentzug verwendet werden.

Beim Melken von Milchtieren wird, sofern ein gewisser Grad an Automatisierung eingesetzt wird, ein Melkbecher, der aus einer Melkbecherhülse, die typischerweise aus Metall hergestellt ist, und einer elastischen Zitzenaufnahme, die auch als Zitzengummi bezeichnet wird, aufgebaut ist, an eine Zitze des zu melkenden Tieres angesetzt, um dann, abhängig von der eingesetzten Melktechnik, mit einem mehr oder minder großen Unterdruck zumeist unter rhythmischer Einfaltung der elastischen Zitzenaufnahme die Milch abzusaugen.

An der Melkbecherhülse sind dabei entsprechende Anschlüsse vorgesehen, um einen Milchschlauch und gegebenenfalls einen Schlauch für die Verbindung zu einem Pulsator anzubringen. In der Regel wird die Melkbecherhülse als ein rohrförmiges Element hergestellt, das einen gewissen Durchmesser und eine gewisse Länge aufweist, die den jeweiligen Einsatzbedingungen angepasst sind. Ferner muss die Melkbecherhülse auch eine gewisse mechanische Stabilität besitzen, so dass Einwirkungen während des Melkvorgangs und insbesondere eine Trittbelastung durch das zu melkende Tier möglichst ohne Schädigung der Melkbecherhülse und der elastischen Zitzenaufnahme abläuft. Zwar sind die verfügbaren Melkbecherhülsen in der Regel technisch ausgereift und werden typischerweise mit einem hohen Grad an Präzision hergestellt, jedoch ist die Flexibilität bei der Handhabung der Melkbecherhülsen nur sehr eingeschränkt gegeben. Beispielsweise ist beim Wechsel der elastischen Zitzenaufnahme ein gewisser Zeitaufwand erforderlich, um die gebrauchte Zitzenaufnahme von oben herauszunehmen und die neue Zitzenaufnahme so einzuführen, dass eine korrekte Positionierung innerhalb der Melkbecherhülse und an ihrem oberen Rand gewährleistet ist.

Des Weiteren sind die Melkbecherhülsen in Verbindung mit den jeweiligen elastischen Zitzenaufnahmen nach tierspezifischen Gegebenheiten ausgelegt, so dass die Verwendung einer Melkbecherhülse für eine Tierart in Verbindung mit einer anderen Tierart in der Regel kaum möglich ist. Auch bei der Verwendung sehr unterschiedlich gestalteter elastischer Zitzenaufnahmen ist gegebenenfalls die Verwendung einer anderen, dazu kompatiblen Melkbecherhülse erforderlich, um ein korrektes Melkverhalten zu erreichen. Insbesondere ist die unterschiedliche Zitzenlänge der Tiere in einer Herde aber auch für unterschiedliche Tierarten ein Grund, der einen Austausch der Melkbecherhülse erfordert.

Das Dokument US 4 269 143 A betrifft eine Zitzenbecheranordnung mit einem zentralen Schalenteil und einem oberen Schalenteil, das mit dem zentralen Schalenteil teleskopisch in Eingriff steht. Mittels eines Anschlagelements kann die Gesamtlänge des Zitzenbechers so eingestellt werden, dass die Abnutzung des Zitzengummis bei längerem Gebrauch berücksichtigt wird, um eine bestimmte erforderliche Spannung des Zitzengummis aufrechtzuerhalten, wodurch die Gesamtnutzungsdauer des Zitzengummis erhöht werden kann. Daher kann ein entsprechender Spannungsverlust des Zitzengummis auf der Grundlage von oberen und zentralen Schalenelementen mit fester Länge berücksichtigt werden.

Die Druckschrift EP 1 806 050 A1 betrifft eine Zitzenbecheranordnung, bei der ein Ventil beweglich in einer Schale angebracht ist, so dass es durch einen Druckunterschied betätigt wird.

Die Druckschrift EP 1 239 726 B1 betrifft eine modulare Melkbecheranordnung mit einem Gehäuse, das eine Kassettenanordnung aufnimmt, die wiederum einen kolbenförmigen Zitzengummi und einen Rahmen zum Halten des Zitzengummis enthält.

Es ist daher eine Aufgabe der vorliegenden Erfindung, Mittel anzugeben, wodurch die Flexibilität für die Verwendung und die Anpassung einer Melkbecherhülse an unterschiedliche Melkbedingungen erhöht wird.

Gemäß der vorliegenden Erfindung wird zur Lösung der zuvor genannten Aufgabe ein modulares Melkbechersystem mit den Merkmalen des Anspruchs 1 bereitgestellt. Weitere vorteilhafte Ausführungsformen sind in den Unteransprüchen aufgezeigt.

Durch diesen modulartigen Aufbau der Melkbecherhülse ist es generell möglich, die Eigenschaften, etwa Abmessungen, Materialart bzw. Materialarten, Form, und dergleichen in unterschiedlicher Weise für die beiden Hülsenteile auszuwählen, ohne dass der gesamte Herstellungsvorgang unnötig kompliziert wird, da beide Hülsenteile unabhängig voneinander hergestellt werden können. Durch die Eigenschaft der Koppelbarkeit der beiden Hülsenteile kann auch eine rasche Anpassung an andere Tierarten und/oder Melkbedingungen erfolgen, wobei gegebenenfalls nur einer der beiden Hülsenteile, etwa der erste Hülsenteil, auszutauschen ist. Wenn etwa eine andere Art von Tieren gemolken wird, bei der sich beispielsweise die Größe der Zitzen deutlich von einer zuvor gemolkenen Tierart unterscheidet, kann dann beispielsweise durch Auswahl eines geeigneten ersten Hülsenteils eine Anpassung an die neue Art der zu melkenden Tiere erfolgen, wohingegen beispielsweise der zweite Hülsenteil gleich bleibt und eine Verbindung zu dem restlichen Melksystem ohne weitere Änderungen ermöglicht. Auch beim Austausch der elastischen Zitzenaufnahme ergibt sich ein erheblicher Vorteil, da aufgrund des modularen Aufbaus der Vorgang der Entnahme der gebrauchten Zitzenaufnahme und die Einführung der neuen Zitzenaufnahme wesentlich weniger zeitaufwändig ist und auch die Position der Zitzenaufnahme, beispielsweise im Hinblick auf eine korrekte Drehposition, ohne großen Aufwand eingestellt und überprüft werden kann. Nach erfolgtem Einsetzen der Zitzenaufnahme in zumindest den ersten Hülsenteil kann daher ohne großen Arbeitsaufwand der zweite Hülsenteil angekoppelt werden.

In einer weiteren Ausführungsvariante weist der zweite Hülsenteil einen Anschluss für einen Milchschlauch und/oder eine Öffnung für ein Auslassende der elastischen Zitzenaufnahme auf. D.h., in dieser Ausführungsvariante ist zumindest die zur Anbindung an den milchführenden Teil der restlichen Melkanlage erforderliche Anschlussanordnung, etwa in Form des Anschlusses oder in Form einer Öffnung, in der eine Anschlussleitung der Zitzenaufnahme durchgeführt werden kann, vorhanden. Dies ist, wie bereits zuvor erläutert ist, besonders vorteilhaft, wenn eine andere Art von Zitzenaufnahme zu verwenden ist und die Anschlussbedingungen an das Milchableitsystem aber relativ unverändert bleiben. Auch beim Austausch einer Zitzenaufnahme mit daran angebrachtem Milchschlauch ist die Einführung der Zitzenaufnahme in diesem Falle aufgrund des modularen Aufbaus der erfindungsgemäßen Melkbecherhülse besonders einfach.

In einer weiteren Ausführungsform ist der Anschluss für einen Milchschlauch abnehmbar an dem zweiten Hülsenteil befestigt. In dieser Variante ergibt sich ein zusätzlicher Grad an erhöhter Flexibilität bei der Verwendung der Melkbecherhülse, da auch zumindest der Anschluss für den Milchschlauch so vorgesehen ist, dass er bei Bedarf von dem zweiten Hülsenteil abgenommen und wieder angekoppelt werden kann. Dies ist insbesondere vorteilhaft, wenn beispielsweise aufgrund von betrieblichen Gegebenheiten der zweite Hülsenteil auszutauschen ist, aber ansonsten die Anschlussbedingungen für das Milchleitungssystem beibehalten werden sollen.

In einer weiteren Ausführungsform weisen der erste oder der zweite Hülsenteil einen Anschluss für eine Pulsationsleitung auf. Wie eingangs bereits erläutert ist, ist für viele Melktechniken eine rhythmische Unterbrechung des Milchflusses aus der zu melkenden Zitze erforderlich, was üblicherweise durch eine gesteuerte Einfaltung der elastischen Zitzenaufnahme bewerkstelligt wird. Zu diesem Zweck wird über die Pulsationsleitung beispielsweise ein erster Druck in den Melkbecher zwischen der Melkbecherhülse und der elastischen Zitzenaufnahme hervorgerufen, der dazu führt, dass der Milchabfluss aus der Zitze möglichst ungehindert erfolgen kann. In einer anderen Betriebsphase, die im Wesentlichen zu einer Unterbrechung des Milchflusses und damit auch zu einer massierenden Bewegung an der Zitze führt, wird ein zweiter, höherer Druck erzeugt. Dieser zweite Druck wird typischerweise durch atmosphärischen Druck oder zumindest einen Druck erreicht, der deutlich höher ist als der Druck in der ersten Betriebsphase, so dass die gewünschte Einfaltung der elastischen Zitzenaufnahme ermöglicht wird. Durch das Vorsehen eines entsprechenden Anschlusses an dem ersten Hülsenteil oder dem zweiten Hülsenteil ergibt sich dadurch ein hohes Maß an Flexibilität bei der Anbindung der entsprechenden Schlauchleitungen an die Melkbecherhülse, indem ein erster Hülsenteil ohne Anschluss einer Pulsationsleitung mit einem zweiten Hülsenteil mit Anschluss kombiniert werden kann, oder umgekehrt ein erster Hülsenteil mit einem Anschluss für die Pulsationsleitung mit einem zweiten Hülsenteil ohne Anschluss kombiniert werden kann, um etwa unterschiedliche Betriebsbedingungen oder unterschiedliche Bedingungen für die Handhabung der Melkbecherhülse zu berücksichtigen.

In einer weiteren vorteilhaften Ausführungsform ist eine Kopplungseinrichtung vorgesehen, die eine mechanische Ankopplung und Entkopplung des ersten und des zweiten Hülsenteil unabhängig vom Aufbau eines wesentlichen Teils des ersten und des zweiten Hülsenteil ermöglicht. In dieser Ausführungsvariante ist also die Kopplungseinrichtung so gestaltet, dass Hülsenteile unterschiedlichen Aufbaus, d.h. mit unterschiedlichen Abmessungen, Materialien, Formen, und dergleichen, miteinander verbunden und entkoppelt werden können. Dabei ist die Ausdrucksweise, dass das Koppeln und Entkoppeln unabhängig vom Aufbau eines wesentlichen Teils des ersten und des zweiten Hülsenteil erfolgt, so zu verstehen, dass zwar im Bereich der Kopplungseinrichtung für beide Hülsenteile eine vorgegebene zueinander kompatible Bauweise vorgesehen ist, so dass der erste und der zweite Hülsenteil miteinander gekoppelt und voneinander entkoppelt werden können, aber der Rest der jeweiligen Teile in nahezu beliebiger und damit unabhängiger Weise aufgebaut sein kann, um damit den diversen unterschiedlichen Gegebenheiten Rechnung zu tragen. Beispielsweise ist die Kopplungseinrichtung als ein Bereich des ersten Hülsenteils und des zweiten Hülsenteils jeweils mit Gewinde versehen ausgebildet, so dass eine Kopplung und Entkopplung der beiden Hülsenteile durch Verschraubung erfolgen kann. In anderen Varianten können entsprechende Verbindungselemente, etwa Klammern, Schrauben, und dergleichen, vorgesehen sein, die an bestimmten Bereichen des ersten und des zweiten Hülsenteils anzubringen sind und somit Bestandteile der Kopplungseinrichtung darstellen, um damit die Hülsenteil miteinander verbinden zu können, ohne dass jedoch der Aufbau des westlichen Teils der jeweiligen Hülsenteile einer weiteren Einschränkung unterliegt.

In einer vorteilhaften Ausführungsform ist die Kopplungseinrichtung so ausgebildet, dass ein Ankoppeln und Entkoppeln des ersten und des zweiten Hülsenteil ohne Werkzeug möglich ist. In dieser Variante wird ein hohes Maß an Bedienungskomfort erreicht, da eine Entkopplung der Hülsenteile jederzeit möglich ist, und somit beispielsweise durch Austausch des ersten und/oder des zweiten Hülsenteils eine möglicherweise erforderliche Anpassung an geänderte Melkbedingungen möglich ist. Insbesondere bei allen zusätzlichen Wartungsarbeiten und anderen anfallenden Aufgaben, etwa dem Austausch der elastischen Zitzenaufnahme, einer gründlichen Reinigung der Melkbecher, bei Inspektion des Pulsraums, usw. ist die Möglichkeit der Kopplung ohne Werkzeug ein entscheidender Vorteil, da der mit den durchzuführenden Handlungen einhergehende finanzielle und zeitliche Aufwand im Vergleich zu konventionellen Melkbechern gering ist. Ferner unterbleiben mögliche Inspektions- und Wartungsarbeiten in konventionellen Melkbechern häufig, da eben ein besonders hoher Aufwand erforderlich ist, um beispielsweise das Innere der Melkbecherhülse, insbesondere den Zwischenraum zwischen der elastischen Zitzenaufnahme und der Melkbecherhülse, d.h., der Pulsraum bzw. Pulsationsraum, zu inspizieren und gegebenenfalls zu reinigen.

In einer weiteren vorteilhaften Ausführungsform sind Dichtungsmittel an einem Kontaktbereich zwischen dem ersten Hülsenteil und dem zweiten Hülsenteil vorgesehen. Durch diese Dichtungsmittel wird bei der Kopplung der beiden Hülsenteile erreicht, dass im Wesentlichen die gleiche Funktionalität entsteht wie bei einer konventionellen nicht-modularen Melkbecherhülse, so dass insbesondere die erforderlichen Druckverhältnisse im inneren der Melkbecherhülse bei Kopplung des ersten und des zweiten Hülsenteils herstellbar sind.

In einer weiteren Ausführungsform ist ein Schutzelement, etwa ein Schutzring, an dem ersten Hülsenteil angebracht oder kann mit diesem gekoppelt werden, um beispielsweise eine geeignete Oberfläche bereitzustellen, an der die elastische Zitzenaufnahme Anliegen kann.

In einer bevorzugten Ausführungsvariante ist ein Ballastelement vorgesehen, das an dem ersten und/oder zweiten Hülsenteil zur Einstellung des Gewichts der Melkbecherhülse befestigt werden kann. Auf diese Weise kann unabhängig von der Materialart, die zur Herstellung des ersten und/oder des zweiten Hülsenteils verwendet wird, ein gewünschtes Gesamtgewicht eingestellt werden, um damit die gewünschten Melkbedingungen zu erhalten. Beispielsweise können beide Hülsenteile oder ein Hülsenteil aus einem zwar widerstandsfähigen aber relativ leichtem Material hergestellt werden, beispielsweise aus Kunststoff, ohne dass dies jedoch Einfluss auf das Verhalten beim Melken hat, wenn dort ein relativ hohes Gewicht der Melkbecher gewünscht ist, um etwa eine gewisse stimulierende Wirkung, eine gewisse Stellung der Melkbecher beim Melken, und dergleichen zu erhalten. Durch das Vorsehen des Ballastelements lässt sich ein gewünschtes Gewicht und damit Verhalten beim Melken in nahezu beliebiger Weise einstellen, indem das geeignete Ballastelement oder ein oder mehrere Ballastelemente ausgewählt werden, um das erforderliche mechanische Verhalten der Melkbecherhülse zu erreichen. Dabei ist es vorteilhaft, dass das Ballastelement abnehmbar an dem ersten und/oder dem zweiten Hülsenteil angebracht werden kann, so dass ein rasches Auswechseln des Ballastelements möglich ist. Dazu ist in anschaulichen Ausführungsformen das Ballastelement als rohrförmiges Bauteil ausgebildet, das beispielsweise über den ersten Hülsenteil und/oder den zweiten Hülsenteil geschoben und an diesen Hülsenteil angekoppelt bzw. arretiert werden kann. Das Ballastelement kann ferner so gestaltet sein, dass es auch als Verstärkungselement dient, um dem ersten und/oder dem zweiten Hülsenteil eine höhere Festigkeit zu verleihen, die ansonsten aus einem Material hergestellt sein können, das geringe Herstellungskosten und/oder effiziente Herstellungsverfahren und/oder geringe Materialmengen, usw. ermöglicht.

In einer weiteren Ausführungsform ist eine Öffnung für einen Lufteinlass an dem ersten oder dem zweiten Hülsenteil vorgesehen. Durch diese Öffnung kann kontinuierlich oder periodisch Luft eingelassen werden, so dass dadurch das Ableiten der ermolkenen Milch gefördert wird und sich dabei günstigere Druckbedingungen unter der Zitze einstellen. In vorteilhaften Ausführungsformen ist die Öffnung zur Aufnahme eines Lufteinlassventils geeignet, das einen gesteuerten Lufteinlass ermöglicht, um damit gezielt und zeitlich begrenzt, Luft in den Milchableitbereich einzuleiten. Dieser durch das Ventil gesteuerte Lufteinlass hat die Eigenschaft, dass zum Zeitpunkt des Abtransports der Milch günstige Druckbedingungen geschaffen werden, danach jedoch keine Luft mehr eingelassen wird, so dass insgesamt die Menge der eingelassenen Luft im Vergleich zu einem kontinuierlichen Einlass nicht größer oder sogar kleiner ist, zum Zeitpunkt der Milchableitung aber dennoch ein ausgeprägterer Druckunterschied hervorgerufen wird. Eine entsprechende Öffnung ist insbesondere vorteilhaft für Melkbecherhülsen, die in Verbindung mit einem Bio-Milker^{®}-Ventil betrieben werden, in welchem periodisch ein Lufteinlass im Milchableitbereich der Melkbecherhülse erfolgt, um damit ein effizienteres und tierschonenderes Melken zu ermöglichen. Vorteilhaft dabei ist, dass diese Öffnung und damit der Ventileinsatz abhängig von den Gegebenheiten an dem ersten oder dem zweiten Hülsenteil vorgesehen sein kann, so dass auch hier ein hohes Maß an Flexibilität bei der Anpassung der Melkbecherhülse an die entsprechende Tierart und/oder die vorherrschenden Melkbedingungen möglich ist. Durch die Möglichkeit, unterschiedliche Gestaltungsformen für einen Hülsenteil hinsichtlich des Lufteinlasses vorsehen zu können, also einen Hülsenteil, der für einen kontinuierlichen Lufteinlass ausgebildet ist, einen Hülsenteil, der für einen periodischen Lufteinlass mittels eines Ventils vorgesehen ist, oder einen Hülsenteil, der keinen Lufteinlass zulässt, ergibt sich wiederum ein hohes Maß an Flexibilität zur Anpassung des Melkbechers an unterschiedliche Gegebenheiten der Melkanlage oder zur Einstellung unterschiedlicher Melkeigenschaften. Alternativ ist in einigen Ausführungsformen vorgesehen, geeignete Einsätze für den ersten und/oder zweiten Hülsenteil vorzusehen.

In einer weiteren vorteilhaften Ausführungsform ist eine verschließbare Wartungsöffnung im zweiten Hülsenteil ausgebildet. Die Wartungsarbeiten, die beispielsweise eine rasche Kontrolle des Innerraums und gegebenenfalls eine Entfernung von Fremdstoffen aus der Melkbecherhülse ermöglicht, ist dabei an einer geeigneten Stelle ausgebildet, die Zugang zu einem Teil des Strömungskanals für die Milch ermöglicht, so dass dort ohne großen Zeitaufwand und Werkzeugeinsatz eine Inspektion und/oder Entfernung von Fremdkörpern möglich ist. Die verschließbare Öffnung kann beispielsweise in Verbindung mit einem Pfropfen vorgesehen sein, der einerseits für einen dichten und zuverlässigen Verschluss der Wartungsöffnung sorgt, andererseits vorteilhafterweise ohne Werkzeug zu entnehmen ist, so dass bereits vor Ort eine Inspektion und gegebenenfalls ein Eingriff möglich sind. Die Wartungsöffnung ist insbesondere vorteilhaft im Situationen, in denen ein häufiger Kontakt des Melkbechers mit dem Boden stattfindet, insbesondere wenn keinerlei Maßnahmen ergriffen sind, um in derartigen Situationen den Betriebsunterdruck an dem beteiligten Melkbecher abzuschalten, da in diesem Falle bevorzugt Fremdkörper eingesaugt werden.

Das Melkbechersystem umfasst mindestens eine Melkbecherhülse mit einem ersten Hülsenteil und einem zweiten Hülsenteil, wobei mehrere erste Hülsenteile und gegebenenfalls mehrere zweite Hülsenteile dem Melkbechersystem angehören. Wie zuvor beschrieben ist, ermöglicht es der modulare Aufbau der Melkbecherhülse in dem System in rascher und effizienter Weise den ersten Hülsenteil und den zweiten Hülsenteil miteinander zu koppeln und zu entkoppeln, so dass viele unterschiedliche oder auch gleiche Varianten einer Melkbecherhülse geschaffen werden können.

Der erste Hülsenteil ist mit unterschiedlichen Längen zur Anpassung an unterschiedliche elastische Zitzenaufnahmen und/oder unterschiedliche Melkbedingungen verfügbar. D.h., in dem Systems ist der erste Hülsenteil in unterschiedlichen Varianten vorhanden, d.h., mit unterschiedlichen Längen, und gegebenenfalls aus unterschiedlichen Materialien aufgebaut, und gegebenenfalls mit unterschiedlicher Gestalt, und dergleichen, so dass eine Vielzahl von Melkbechervarianten hergestellt werden kann. Wie bereits zuvor erläutert ist, kann es häufig erforderlich sein, tierspezifische Eigenheiten zu berücksichtigen, indem etwa eine geeignete Zitzenaufnahme ausgewählt wird, etwa im Hinblick auf Durchmesser und/oder Länge, und dergleichen, wodurch wiederum eine Anpassung der Melkbecherhülse erforderlich ist, die beispielsweise durch die Bereitstellung eines geeigneten ersten Hülsenteils bewerkstelligt werden kann. Beispielsweise ist für das Melken von kleinen Milchtieren, etwa von Ziegen, Schafen, und dergleichen ein gewisser Größenbereich der Zitzenaufnahme üblicherweise gewünscht, die sich jedoch deutlich von den Abmessungen von Zitzenaufnahme für größere Milchtiere, etwa Kühe, unterscheiden. In der Regel ist es daher nicht möglich, vorhandene Melkbecher, die etwa für Ziegen verwendet werden, auch im Umfeld größerer Milchtiere zu verwenden. In dem erfindungsgemäßen Melkbechersystem kann jedoch ein wesentlicher Bestandteil der Melkbecherhülse beibehalten werden, etwa der zweite Hülsenteil, während der erste Hülsenteil an die gewünschte Melkbedingungen angepasst wird, so dass beispielsweise ein geeignet dimensionierter erster Hülsenteil mit einem bestehenden zweiten Hülsenteil kombiniert wird. In anderen Fällen kann es gewünscht sein, generell eine andere Materialart oder eine Kombination von Materialien für den ersten Hülsenteil anzuwenden, um gewissen Bedingungen Rechnung zu tragen, etwa dem Gesamtgewicht, der Handhabung des Melkbechers, und dergleichen. Der erste Hülsenteil ist mit unterschiedlicher Länge verfügbar, so dass auf unterschiedlichen Längen der elastischen Zitzenaufnahme reagiert werden kann.

In einer weiteren vorteilhaften Ausführungsform ist der zweite Hülsenteil mit unterschiedlichen Anschlussanordnungen zur Anbindung an ein Milchleitungssystem und/oder einen Pulsator vorgesehen. Häufig tritt die Situation auf, dass ein Melkgeschirr und somit die Melkbecher zwar im Prinzip für den Melkvorgang einer speziellen Tierart und die örtlichen Gegebenheiten geeignet sind, aber beispielsweise der Milchabtransport einen Anschluss in einer bestimmten Richtung, zum Beispiel angewinkelt, geradlinig, und dergleichen, erfordert, um ein optimales Melken zu ermöglichen. In diesem Falle wird lediglich der zweite Hülsenteil mit geeigneter Anschlusskonfiguration ausgewählt und anstelle eines vorhandenen zweiten Hülsenteils mit dem bestehenden ersten Hülsenteil gekoppelt, um damit den neuen Anforderungen gerecht zu werden. Dies kann beispielsweise günstig sein, wenn generell der Abstand zwischen Zitzenspitze und Boden beim Melken aufgrund durchgeführter Maßnahmen geändert wird, so dass beispielsweise ein gerader Anschlussstutzen zur Anbindung an eine Milchleitung ungeeignet ist, und eine gewinkelte Anschlussgeometrie benötigt wird.

Vorteilhaft ist auch, wie bereits zuvor erwähnt ist, dass der erste und/oder der zweite Hülsenteil in Ausführungsvarianten mit unterschiedlichen Materialien in dem Melkbechersystem verfügbar sind.

In weiteren vorteilhaften Varianten ist der Anschluss bzw. die Anschlussanordnung zur Verbindung mit einer Milchleitung und/oder Pulsationsleitung modular ausgebildet und kann daher unabhängig von anderen Eigenschaften der Melkbecherhülse an den zweiten Hülsenteil angekoppelt werden.

Als Beispiel, das zum besseren Verständnis der Erfindung dient, ist ein Verfahren zur Anpassung einer Melkbecherhülse angegeben. In dem Verfahren werden ein erster Hülsenteil und ein zweiter Hülsenteil so ausgewählt, dass sie für die Aufnahme einer gewünschten elastischen Zitzenaufnahme geeignet sind. D.h., es werden geeignete Kandidaten für den ersten Hülsenteil und geeignete Kandidaten für den zweiten Hülsenteil ermittelt, die die gestellten Anforderungen im Hinblick auf die Zitzenaufnahme erfüllen. In einem weiteren Schritt werden der erste Hülsenteil und der zweite Hülsenteil so ausgewählt, dass sie auch für den Anschluss an ein Melksystem geeignet sind. D.h., aus den ermittelten Kandidaten werden solche ausgewählt, die auch den Vorrausetzungen genügen, mit dem gegebenen Melksystem verbunden zu werden. Schließlich werden der erste Hülsenteil und der zweite Hülsenteil gekoppelt, so dass eine Melkbecherhülse geschaffen wird, die den vorgegebenen Bedingungen genügt. Insbesondere kann in dem Verfahren in einer weiteren Variante ein Gesamtgewicht der Melkbecherhülse eingestellt werden, indem ein Ballastelement und/oder eine Auswahl einer Materialart für den ersten und/oder den zweiten Hülsenteil erfolgt. Ein derartiges Verfahren in Verbindung mit dem modularen Aufbau der erfindungsgemäßen Melkbecherhülse erlaubt es nicht nur, im Vorfeld eines Melkvorgangs eine geeignete Kombination für eine Melkbecherhülse auszuwählen und zu erstellen, sondern es ist auch möglich, in effizienter Weise während des Melkvorgangs selbst beispielsweise eine effiziente Anpassung des Gesamtgewichts und damit des mechanischen Verhaltens der Melkbecherhülse vorzunehmen, da die Eigenschaften der Melkbecherhülse schnell und einfach angepasst werden können.

In einer weiteren Variante umfasst das Verfahren das Auswählen einer geeigneten Anschlussanordnung für eine Pulsationsleitung durch Auswahl eines entsprechenden ersten oder zweiten Hülsenteils oder durch Anbringung eines Zusatzteils in unterschiedlicher Bauweise. D.h., die Anpassung an das Pulsationssystem kann gegebenenfalls unabhängig von anderen Eigenschaften der Becherhülse erfolgen.

In einer weiteren Variante umfasst das Verfahren das Auswählen einer geeigneten Anschlussanordnung für eine Milchleitung durch Auswahl eines entsprechenden zweiten Hülsenteils und/oder einer modularen Anschlussanordnung, die mit dem zweiten Hülsenteil koppelbar ist. Auf diese Weise kann eine Anpassung an die Milchleitung erfolgen, ohne von anderen Gegebenheiten des Melksystems beeinflusst zu werden. Insbesondere ist es durch Auswahl eines passenden modularen Anschlusses möglich, eine für die vorliegende Situation passende Anschlusskonfiguration für den Anschluss der Milchleitung ohne Einfluss auf die weitere Konfiguration der Becherhülse vorzusehen. Beispielsweise kann durch Auswahl eines passenden Anschlusses eine geradlinige Ableitung, oder eine angewinkelte und in eine gewünschte Richtung weisende Verbindung zu der Milchleitung gesorgt werden.

In einer weiteren vorteilhaften Ausführungsform umfasst das Verfahren ferner das Auswählen des ersten und/oder des zweiten Hülsenteils derart, dass ein periodischer Lufteinlass, ein kontinuierlicher Lufteinlass oder kein Lufteinlass bei der Ableitung von Milch ermöglicht wird. Eine Anpassung in dieser Hinsicht kann dabei ebenfalls unabhängig zur restlichen Konfiguration der Becherhülse erfolgen. D.h., durch das modulare System kann eine Anpassung, auch iterativ oder auch kurzfristig während des Betriebs, erreicht werden, wobei neben dem wichtigen Aspekt der Anpassung der Zitzenaufnahme an die Tierart und/oder Zitzenlänge, eine Einstellung, bei Bedarf auch unabhängig voneinander, weiterer wichtiger Aspekte, etwa der Anschlusskonfiguration für die Pulsationsleitung, der Anschlusskonfiguration der Milchleitung und die Art des Lufteinlasses, also periodisch, kontinuierlich oder kein Lufteinlass, vorgenommen werden kann.

Weitere vorteilhafte Ausführungsformen sind in den abhängigen Patentansprüchen aufgezeigt und gehen auch aus der weiteren detaillierten Beschreibung hervor.

Die Beschreibungen weiterer Ausführungsbeispiele erfolgt in Verbindung mit den begleitenden Zeichnungen, in denen:
Figur 1a eine perspektivische Aufrissansicht einer erfindungsgemäßen Melkbecherhülse einer anschaulichen Ausführungsform zeigt,
Figur 1b eine Seitenansicht der erfindungsgemäßen Melkbecherhülse zeigt, wobei ein montierter Zustand dargestellt ist, in welchem eine elastische Zitzenaufnahme enthalten ist, so dass die Kombination aus Melkbecherhülse und elastische Zitzenaufnahme einen Melkbecher bildet,
Figur 2a eine perspektivische Aufrissansicht einer weiteren Ausführungsform der erfindungsgemäßen Melkbecherhülse zeigt, wobei ein Milchschlauchanschluss seitlich, d.h. angewinkelt zur Längsachse der Melkbecherhülse vorgesehen ist,
Figur 2b eine Seitenansicht eines Melkbechers, d.h. einer erfindungsgemäßen Melkbecherhülse in Verbindung mit einer elastischen Zitzenaufnahme zeigt.

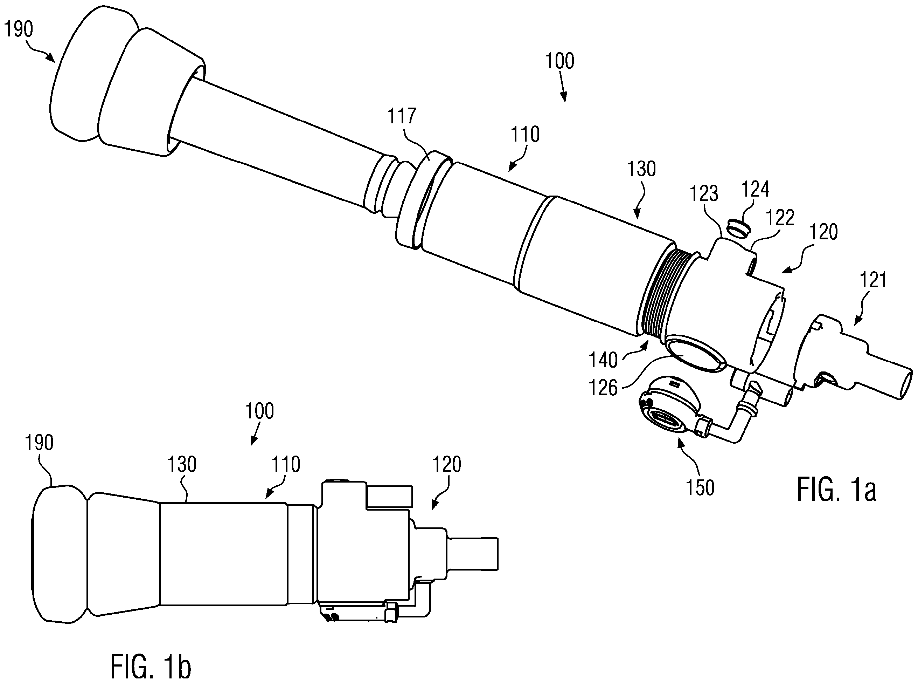

Figur 1a zeigt eine perspektivische Aufrissansicht einer Melkbecherhülse 100, die zumindest aus einem ersten Hülsenteil 110 und einem zweiten Hülsenteil 120 aufgebaut ist. Der erste Hülsenteil 110 ist in der gezeigten Ausführungsform so ausgebildet, dass er für das Einführen einer elastischen Zitzenaufnahme 190, auch als Zitzengummi bezeichnet, geeignet ist, wobei die Hülse 110 so gestaltet ist, dass sie geeignete Abmessungen hat, um die elastische Zitzenaufnahme 190 für eine korrekte Betriebsweise aufzunehmen. D.h., der Hülsenteil 110 ist insbesondere in Durchmesser und Länge so gestaltet, dass er an die gewünschte Art und Größe, das heißt, Durchmesser und Länge, der Zitzenaufnahme 190 angepasst ist. In anschaulichen Ausführungsformen kann ein Schutzring 117 vorgesehen sein, der gegebenenfalls zur Kantenverrundung oder zu einer anderen Schutzfunktion dient, um einen möglichst materialschonenden Kontakt zwischen der Aufnahme 190 und dem Hülsenteil 110 zu ermöglichen. In anderen Ausführungsformen ist der Schutzring 117 gleichzeitig als ein Anpassungselement ausgebildet, so dass gegebenenfalls auch eine Anpassung an unterschiedliche Formen und/oder Abmessungen der elastischen Zitzenaufnahme 190 mit dem gleichen Hülsenteil 110 erfolgen kann. Im Hinblick auf die Länge der elastischen Zitzenaufnahme 190 ist anzumerken, dass eine geeignete Anpassung durch Auswahl eines geeigneten ersten Hülsenteils 110 und/oder eines geeigneten zweiten Hülsenteils 120 effizient erfolgen kann. Wenn etwa die Melkbecherhülse 100 ein Teil eines Melkbechersystems ist, in welchem mehrere erste Hülsenteile 110 zur Verfügung stehen, die unterschiedliche Eigenschaften haben, beispielsweise unterschiedliche Durchmesser und/oder Längen und/oder Geometrien und/oder Materialzusammensetzungen und/oder unterschiedliche Anschlussvarianten, und dergleichen, lässt sich eine einfache Anpassung an die Gegebenheiten der zu verwendenden elastischen Zitzenaufnahme 190 erreichen.

In der dargestellten Ausführungsform ist der zweite Hülsenteil 120 ausgebildet, dass er eine Öffnung für die Zitzenaufnahme 190 aufweist, wenn diese einen integrierten Milchschlauch enthält, oder ein Anschluss 121 vorgesehen ist, der mit der Zitzenaufnahme 190 in Kontakt gebracht wird, so dass eine Strömungsverbindung zwischen dem Anschluss 121 mit einem Auslassende der Zitzenaufnahme 190 entsteht. In der dargestellten Ausführungsform verläuft die Anschlussrichtung des Anschlusses 121 im Wesentlichen in einer Längsrichtung der Melkbecherhülse 100, so dass in dieser Geometrie die Milch besonders effizient ohne größere Strömungswiderstände abgeführt werden kann.

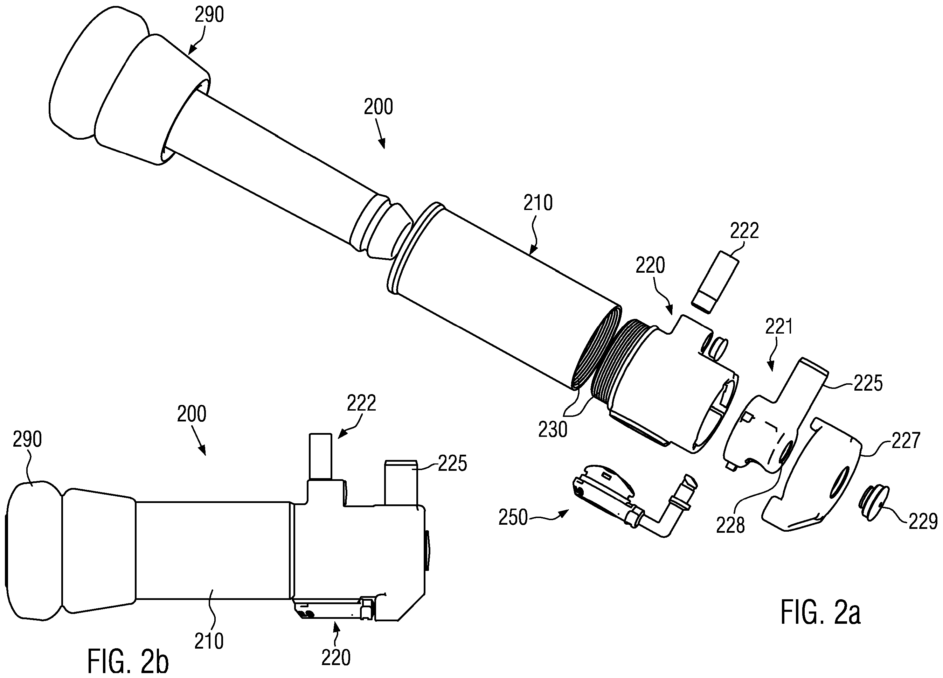

In einer weiteren Ausführungsform, wie beispielsweise in Figur 1a gezeigt ist, ist der Anschluss 121, der zur Milchableitung dient, als eine separate Komponente vorgesehen, die so ausgebildet ist, dass sie mechanisch an den zweiten Hülsenteil 120 angekoppelt und abgekoppelt werden kann. Der Anschluss 121 stellt daher in dieser Ausführungsvariante einen dritten Hülsenteil dar, der hier mit dem gleichen Bezugszeichen 121 belegt ist, und eine geeignete Geometrie für den Anschluss einer Milchleitung bereitstellt. D.h., der dritte Hülsenteil in Form des Anschlusses 121 ist so ausgebildet, dass er einerseits mit dem zweiten Hülsenteil 120 gekoppelt werden kann, andererseits aber eine geeignete Geometrie für das Herausführen der Milch und damit für den Anschluss einer Milchleitung bereitstellt. In der gezeigten Ausführungsvariante ist dies eine in Längsrichtung des Melkbechers verlaufende Anschlussrichtung, während in anderen Varianten, wie beispielsweise nachfolgend in Verbindung mit den Figuren 2a, 2b gezeigt ist, eine angewinkelte Geometrie bereitgestellt wird. Jedoch sind auch andere Anschlussgeometrien für einen jeweiligen Anschluss des dritten Hülsenteils in Form des Anschlusses 121 möglich, sodass eine effiziente Anpassung an gegebene Bedingungen möglich ist.

Ferner ist in dieser Ausführungsform ein Anschluss 122 vorgesehen, der zur Verbindung mit einer Pulsationsleitung dient, die, wie bereits eingangs erwähnt ist, geeignete Druckbedingungen in einem Pulsraum schafft, d.h. einem Zwischenraum, der zwischen der Außenwand der Zitzenaufnahme 190 und der Wandung der Melkbecherhülse 100 gebildet wird, sobald die Aufnahme 190 in den Melkbecherhülse 100 eingeführt und dort mit dem Anschluss 121 verbunden wird. In der gezeigten Ausführungsform kann der Anschluss 122 für eine Pulsationsleitung einen oder mehrere weitere Eingangsanschlüsse aufweisen, etwa eine Öffnung 123, die mit einem Pfropfen 124 verschließbar ist, um einen höheren Grad an Flexibilität beim Anschließen der Pulsationsleitung zu erhalten. Es sollte beachtet werden, dass der Anschluss 122 für die Pulsationsleitung bei Bedarf auch an dem ersten Hülsenteil 110 vorgesehen sein kann, oder dass entsprechende verschließbare Öffnungen für eine Pulsationsleitung sowohl an dem ersten Hülsenteil 110 als auch an dem zweiten Hülsenteil 120 vorgesehen werden können, um ein hohes Maß an Flexibilität bei der Anpassung an gegebene Melkeinrichtungen zu ermöglichen.

In weiteren Ausführungsvarianten werden unterschiedliche zweite Hülsenteile 120 vorgesehen, in denen unterschiedliche Anschlussgeometrien für den Anschluss 122 ausgebildet sind, ohne dass dazu verschließbare Öffnungen vorzusehen sind, so dass durch Auswahl eines geeigneten zweiten Hülsenteils eine gewünschte Anschlusskonfiguration eingestellt werden kann. Insbesondere im Zusammenwirken mit einem modularen Anschluss 121 als ein dritter Hülsenteil ergibt sich somit ein hohes Maß an Flexibilität bei der Einstellung der gesamten Anschlusskonfiguration für die Melkbecherhülse. D.h., es kann eine geeignete Anschlussgeometrie für die Pulsationsleitung durch Auswahl des zweiten Hülsenteils 120 mit der passenden Anschlussgeometrie für den Anschluss 122 in Verbindung mit einer geeigneten Anschlusskonfiguration für den Anschluss 121, der an dem zweiten Hülsenteil 120 angekoppelt wird, eingestellt werden.

Zur Anbindung an eine Pulsationsleitung kann für den ansonsten gleichen Hülsenteil eine Anpassung vorgenommen werden, indem lediglich der Anschluss 122 durch Einsetzen eines geeigneten Zusatzteils, etwa in Form eines modularen Anschlussstutzens, wie er beispielsweise als Anschluss 222 in Figur 2a, 2b gezeigt ist, und durch Verwendung einer geeigneten Abdeckung 124 an die gegebenen Verhältnisse zum Anschluss an eine Pulsationsleitung angepasst wird.

In der dargestellten Ausführungsform ist ferner ein Lufteinlassventil 150 vorgesehen, das in eine Öffnung 126 eingepasst ist, die in der dargestellten Ausführungsform in dem zweiten Hülsenteil 120 ausgebildet ist, in anderen Ausführungsformen stattdessen aber auch in dem ersten Hülsenteil 110 vorgesehen sein kann. Das Lufteinlassventil 150 dient dem periodischen Lufteinlass, um ein schonenderes und gleichzeitig effizienteres Melken zu erreichen, indem beispielsweise günstigere Unterdruckbedingungen an der Zitze des zu melkenden Tieres und auch ein verbessertes Ableiten der ermolkenen Milch erreicht werden.

Wie bereits zuvor erläutert ist, ist in anderen Ausführungsvarianten die Öffnung 126 so vorgesehen, dass ohne Verwendung eines Lufteinlassventils ein kontinuierlicher Lufteinlass erfolgen kann, wenn dies als eine geeignete Variante erachtet wird, um den Abtransport der ermolkenen Milch zu verbessern. In anderen Varianten ist keine entsprechende Öffnung für einen kontinuierlichen oder periodischen Lufteinlass vorgesehen, wenn etwa ein Milchsammelstück verwendet wird, in welchem bereits eine entsprechende Öffnung für einen kontinuierlichen Lufteinlass vorhanden ist. Durch die Möglichkeit, eine entsprechende Öffnung an dem ersten oder dem zweiten Hülsenteil vorzusehen und damit entsprechende Hülsenteile mit unterschiedlichen Öffnungen bereitzustellen, wird wiederum ein hohes Maß an Flexibilität bei der Einstellung der endgültigen Konfiguration der Melkbecherhülse erreicht. D.h., in vorteilhaften Varianten lassen sich die Bedingungen für einen Lufteinlass, d.h., periodisch oder kontinuierlich, oder auch der Verzicht auf einen Lufteinlass, gegebenenfalls unabhängig von anderen Eigenschaften, etwa der Anschlussgeometrie für die Ableitung der Milch und/oder der Anschlussgeometrie der Pulsationsleitung einstellen. Beispielsweise kann durch den modularen Anschluss 121 in Form eines dritten Hülsenteils die gewünschte Anschlussgeometrie für die Milchableitung eingestellt werden, ohne dass dabei gegebenenfalls die Anschlusskonfiguration für die Pulsationsleitung und/oder die Art des Lufteinlasses zu verändern sind. Gleiches gilt für die Anschlussgeometrie der Pulsationsleitung, die beispielsweise unabhängig von der Art des Lufteinlasses und der Anschlussgeometrie für die Milchableitung eingestellt werden kann. In gleicher Weise kann die Art des Lufteinlasses, d.h., periodisch, kontinuierlich oder kein Lufteinlass, eingestellt werden, ohne dabei die beiden anderen Aspekte der Melkbecherhülse zu beeinflussen.

Der erste Hülsenteil 110 und der zweite Hülsenteil 120 sind mit einer Kopplungseinrichtung 140 lösbar aneinander befestigbar, so dass in bevorzugten Ausführungsformen ein Koppeln und Entkoppeln des ersten Hülsenteils 110 und des zweiten Hülsenteils 120 ohne Verwendung von Werkzeugen möglich ist. In der dargestellten Ausführungsform ist die Kopplungseinrichtung in Form von entsprechenden Gewindebereichen, die an dem ersten Hülsenteil 110 und in komplementärer Form an dem zweiten Hülsenteil 120 ausgebildet sind. Die Verwendung einer Kopplungseinrichtung als Schraubverbindung ist besonders vorteilhaft für einen zuverlässigen jedoch ohne Werkzeug lösbaren Befestigungsmechanismus, so dass eine rasche Änderung der Kombination aus erstem Hülsenteil und zweitem Hülsenteil erfolgen kann. Vorzugsweise ist ein Dichtungsmittel, etwa in Form eines O-Rings, und dergleichen, vorgesehen, wenn die Kopplungseinrichtung 140 nicht per se eine ausreichende Dichtigkeit in Verbindung mit der Gestalt und der Materialart des ersten Hülsenteils 110 und des zweiten Hülsenteils 120 sicherstellen kann.

Des Weiteren ist ein Ballastelement 130 vorgesehen, das beispielsweise anwendbar ist, wenn das Gesamtgewicht der Melkbecherhülse 100 nicht ausreichend ist, um die gewünschte Wirkung beim Melken zu erreichen. Beispielsweise kann es im Hinblick auf eine effizientere Stimulation während des Melkvorgangs günstig sein, ein gewisses Mindestgewicht der Melkbecherhülse 100 vorzusehen, das durchaus tierindividuell sein kann, so dass durch die Bereitstellung unterschiedlicher Ballastelemente 130 in Abhängigkeit von dem Grundgewicht der Hülsenteile 110 und 120 ein gewünschtes Gesamtgewicht eingestellt werden kann. In anderen Fällen sind der erste und/oder der zweite Hülsenteil 110, 120 bereits mit unterschiedlichen Eigengewichten bei ansonsten gleicher Bauteilgeometrie verfügbar, so dass durch Kombination entsprechender Hülsenteile ebenfalls ein gewünschtes Gesamtgewicht erreicht werden kann. Jedoch ist die Möglichkeit einer zusätzlichen Verwendung eines Ballastelements günstig, da damit das Verhalten der Melkbecherhülse 100 beim Melken rasch geändert werden kann, ohne an dem grundlegenden Aufbau und den bestehenden Verbindungen eine wesentliche Änderung durchführen zu müssen. Das Ballastelement 130 kann an dem ersten Hülsenteil 110 und/oder dem zweiten Hülsenteil 120 durch beliebige geeignete Mittel befestigt werden, beispielsweise kann eine entsprechende Schraubverbindungen, und dergleichen vorgesehen werden. In anderen Fällen wird das Ballastelement 130 lediglich über beispielsweise den ersten Hülsenteil 110 geschoben und aufgrund einer geeignet angeordneten Anschlagsfläche in Verbindung mit der elastischen Zitzenaufnahme 190 fixiert.

Figur 1b zeigt die Melkbecherhülse 100 in Form eines betriebsbereiten Melkbechers, d.h. die elastische Zitzenaufnahme 190 ist in der Melkbecherhülse 100 installiert und der erste Hülsenteil 110 und der zweite Hülsenteil 120 sind miteinander gekoppelt. In diesem Zustand können die erforderlichen Leitungen, etwa die Pulsationsleitung, ein Milchschlauch, und dergleichen an der Melkbecherhülse 100, in der gezeigten Ausführungsform an den entsprechenden Anschlüssen, die an dem zweiten Hülsenteil 120 ausgebildet sind, angeschlossen werden.

Figur 2a zeigt eine perspektivische Aufrissansicht einer weiteren Ausführungsform einer Melkbecherhülse mit modularem Aufbau gemäß der vorliegenden Erfindung. Eine Melkbecherhülse 200, die in Verbindung mit einer elastischen Zitzenaufnahme 290, einen Melkbecher bildet, umfasst einen ersten Hülsenteil 210 und einen zweiten Hülsenteil 220. Der erste Hülsenteil 210 ist im Wesentlichen in Zylinderform ausgebildet mit Abmessungen, d.h. Durchmesser und Länge, die für die Zitzenaufnahme 290 geeignet sind und in Verbindung mit dem zweiten Hülsenteil 220 den Anschluss der Zitzenaufnahme 290 an einer Anschlussanordnung 221 zum Ableiten von Milch ermöglicht. Wie bereits zuvor erläutert ist, kann der erste Hülsenteil 210 aus einem beliebigen Material hergestellt sein, etwa Kunststoff, diversen Metallarten, Verbundmaterialien, und dergleichen, wie dies für die in Betracht stehende Melksituation als geeignet erachtet wird. In einem entsprechenden System sind in der Regel mehrere auch unterschiedliche Hülsenteile 210, 220 verfügbar, so dass eine geeignete Kombination ausgewählt werden kann, die den bestehenden Anforderungen am besten gerecht wird. Dabei ist eine Kopplungseinrichtung 230 so ausgebildet, dass der erste Hülsenteil 210 und der zweite Hülsenteil 220 auch bei ansonsten unterschiedlichen Abmessungen, beispielsweise im Hinblick auf den Durchmesser außerhalb der Kopplungseinrichtung 230, miteinander verbunden werden können. Beispielsweise ist die Kopplungseinrichtung 230 als Schraubverbindung ausgebildet. Wie zuvor erläutert ist, können geeignete Dichtungsmittel vorgesehen werden, wenn die durch die Kopplungseinrichtung 230 erreichte Dichtigkeit als nicht ausreichend erachtet wird. In Ausführungsformen wird beispielsweise ein O-Ring an einer geeigneten Stelle in dem ersten Hülsenteil 210 und/oder dem zweiten Hülsenteil 220 vorgesehen. Der zweite Teil 220 weist in dieser Ausführungsform die erforderlichen Anschlüsse für die Milchableitung und Verbindung mit einer Pulsationsleitung auf, wie dies bereits zuvor in Verbindung mit der Ausführungsform der Figur 1 erläutert ist. Die Anbindung an eine Milchleitung kann auch dadurch erfolgen, dass ein geeigneter Anschluss 221 für einen ansonsten unveränderten Hülsenteil angekoppelt wird.

Für die Anbindung an eine Pulsationsleitung kann für den ansonsten gleichen Hülsenteil eine Anpassung vorgenommen werden, indem lediglich der Anschluss 222 durch Verwendung eines geeigneten Zusatzteils, das hier in Form eines modularen Anschlussstutzens gezeigt ist, und durch Verwendung einer geeigneten Abdeckung an die gegebenen Verhältnisse zum Anschluss an eine Pulsationsleitung angepasst wird, wie dies auch im Zusammenhang mit dem Anschluss 122 zuvor beschrieben ist.

In der dargestellten Ausführungsform ist die Anschlussanordnung 221 zur Verbindung mit der elastischen Zitzenaufnahme 290 so ausgebildet, dass ein Anschluss 225 angewinkelt zu der Längsrichtung der Becherhülse 200 orientiert ist, so dass eine seitliche Ableitung der ermolkenen Milch möglich ist. Eine derartige Anordnung ist vorteilhaft, wenn etwa nicht ausreichend Bodenfreiheit für die Melkbecherhülse 200 während des Melkvorgangs gewährleistet ist, etwa weil der Abstand zwischen Zitzenspitze des zu melkenden Tieres und dem Boden ein gerades Herausführen der Milch und daher eine geradlinige Verbindung zu einem Milchschlauch nicht ermöglicht. Beispielsweise kann der zweite Hülsenteil 220 einfach ausgetauscht werden, etwa gegen einen Hülsenteil wie er in Figur 1 dargestellt ist, wenn andere räumliche Bedingungen oder eine andere Melksituation vorherrschen, ansonsten aber ein Melkbecher mit gleichen Eigenschaften benötigt wird.

In der gezeigten Ausführungsform ist ferner ein Lufteinlassventil 250 vorgesehen, das einen periodischen Lufteinlass ermöglicht, wobei in der dargestellten Ausführungsform das Lufteinlassventil 250 wiederum an dem zweiten Hülsenteil 220 vorgesehen ist. Ferner ist in dem zweiten Hülsenteil 220 eine Wartungsöffnung 228 vorgesehen, die so dimensioniert und positioniert ist, dass Zugang zu einem Milchableitbereich ermöglicht wird, beispielsweise einem Bereich, in welchem die Milchableitung von der zur Längsrichtung der Melkbecherhülse 200 verlaufenden Strömungsrichtung in die dazu senkrechte Richtung des angewinkelten Anschlusses 225 wechselt. Dieser Bereich kann einen kritischen Bereich darstellen, da hier bevorzugt Fremdkörper anzutreffen sind, die während des Melkvorgangs, etwa bei abgefallenem Becher, angesaugt werden. Die Wartungsöffnung 228 ist in der gezeigten Ausführungsform so gestaltet, dass sie ohne Verwendung von Werkzeugen geöffnet und verschlossen werden kann. Dazu ist beispielsweise ein Stöpsel 229 vorgesehen, der einerseits eine zuverlässige Abdichtung der Wartungsöffnung 228 gewährleistet, andererseits aber ohne großen Aufwand den Zugang ermöglicht, so dass insbesondere während des Melkvorgangs in rascher Weise eine Inspektion und/oder Wartung an der Melkbecherhülse 200 vorgenommen werden kann.

In der dargestellten Ausführungsform ist ferner ein Schutzelement 227 vorgesehen, etwa in Form einer Schutzkappe, die empfindliche Bereiche, insbesondere der Anschlussanordnungen 221, des zweiten Hülsenteils 220 und Teile des Lufteinlassventils 250 schützt, andererseits aber Zugang zu der Wartungsöffnung 228 sowie zu dem Anschluss 225 ermöglicht. Das Schutzelement 227 ist aus einem beliebigen geeigneten Material hergestellt, das die erforderliche Flexibilität zum Anbringen an dem zweiten Hülsenteil 220 hat und die gewünschte Schutzwirkung entfaltet.

Figur 2b zeigt die Melkbecherhülse 200 in Form eines Melkbechers, d.h. die elastische Zitzenaufnahme 290 ist in der Hülse 200 integriert und die beiden Hülsenteile 210 und 220 sind miteinander gekoppelt.

Für die Melkbecherhülse 200 gelten im Hinblick auf die Aspekte des Lufteinlasses, der Anschlussgeometrie für die Pulsationsleitung und für die Milchableitung die gleichen Kriterien, wie sie bereits zuvor im Zusammenhang mit der Melkbecherhülse 100 erläutert sind.

Wie bereits zuvor erläutert ist, stellt die vorliegende Erfindung ein modulares Melkbechersystem bereit, in dem mehrere erste Hülsenteile, etwa die Hülsenteil 110, 210, die durchaus in einigen Eigenschaften unterschiedlich sein können, und mehrere zweite Hülsenteile 120, 220 verfügbar sind, die sich ebenfalls in ihren Eigenschaften unterscheiden können. D.h., es können mehrere erste Hülsenteile 110 vorgesehen sein, die sich in Materialart, und damit im Gewicht, in der generellen Geometrie, in der Länge, im Durchmesser, usw. unterscheiden jedoch beispielsweise aufgrund der Kopplungseinrichtung 130, 230 so ausgebildet sind, dass sie mit allen zweiten Hülsenteilen 120, 220 kombinierbar sind. Auch die zweiten Hülsenteile 120, 220 können in vielen unterschiedlichen Varianten verfügbar sein, so dass eine Anpassung an unterschiedliche Anschlusskonfigurationen, und dergleichen in einfacher Weise möglich ist. Ein Nutzer kann somit durch Auswahl der geeigneten Hülsenteile einen Melkbecher zusammenstellen, der für eine spezielle Melksituation am besten geeignet ist. Dies kann auch kurzfristig vor oder während des Melkbetriebs oder in einer Vorbereitungsphase erfolgen, wenn etwa Änderungen an der Melkanlage, Änderungen der baulichen Gegebenheiten, Änderungen der Melkstrategie generell, usw. diesbezüglich angepasste Geometrie und/oder oder ein angepasstes Gewicht des Melkbechers erforderlich machen.

Insbesondere können auch bei modularem Aufbau der Anschlusskonfiguration für die Milchableitung, d.h., des Anschlusses 121, 221, äußerst flexible Voraussetzungen geschaffen werden, um eine Anpassung an unterschiedliche Bedingungen zu ermöglichen. D.h., in vorteilhaften Varianten lassen sich die Bedingungen für den Lufteinlass der Melkbecherhülse unabhängig von dem Aspekt der Anschlusskonfiguration für die Pulsationsleitung und/oder die Milchableitung einstellen. In analoger Weise lässt sich die Anschlusskonfiguration für die Pulsationsleitung gegebenenfalls unabhängig von der Anschlusskonfiguration der Milchableitung und/oder unabhängig von der Art des Lufteinlasses einstellen. In gleicher Weise lässt sich gegebenenfalls die Anschlusskonfiguration für die Milchableitung bei Bedarf unabhängig von der Art des Lufteinlasses und/oder der Anschlusskonfiguration für die Pulsationsleitung auswählen. Auf diese Weise kann bei Kenntnis der gegebenen anlagenspezifischen Bedingungen und räumlichen Verhältnisse und bei Kenntnis der tierspezifischen Gegebenheiten ein für die jeweilige Anwendung optimal zusammengestellter Melkbecher bereitgestellt werden, wobei auf entsprechende einzelne Modulkomponenten zurückgegriffen werden kann, ohne dass die Notwendigkeit besteht, für den jeweiligen Zweck jeweils einen kompletten Melkbecher vorzusehen. Insbesondere kann eine iterative Anpassung erfolgen, in dem lediglich eine jeweilige Komponente des modularen Melkbechersystems ausgetauscht wird, bis das gewünschte Ergebnis erreicht ist.

In anderen Situationen kann selbst sehr kurzfristig das Melkverhalten der modularen Melkbecherhülse geändert werden, indem das Gewicht mittels Austausch von Hülsenteilen, vorzugsweise Austausch des ersten Hülsenteils, möglicherweise in Verbindung mit dem Vorsehen eines Ballastelements an die gewünschten Anforderungen angepasst wird.

## Patentansprüche

1. Modulares Melkbechersystem mit
mehreren ersten Hülsenteilen (110; 210), die jeweils zum Einführen einer elastischen Zitzenaufnahme (190; 290) ausgebildet sind, und
mehreren zweiten Hülsenteilen (120; 220), die jeweils an jeden der ersten Hülsenteile (110; 210) zur Erreichung der Betriebsbereitschaft ankoppelbar und von den ersten Hülsenteil (110; 210) abkoppelbar sind,
wobei eine Melkbecherhülse (100; 200) aus einem der ersten Hülsenteile und einem der zweiten Hülsenteile zusammenstellbar ist,
wobei die ersten Hülsenteile (110; 210) mit unterschiedlichen Längen zur Anpassung an unterschiedlich lange elastische Zitzenaufnahmen (190; 290) für unterschiedliche Tierarten oder Zitzenlängen und/oder unterschiedliche Melkbedingungen verfügbar sind.

2. Modulares Melkbechersystem nach Anspruch 1, wobei jeder der zweiten Hülsenteile (120; 220) einen Anschluss (121, 221) für einen Milchschlauch und/oder eine Öffnung für ein Auslassende der elastischen Zitzenaufnahme aufweist.

3. Modulares Melkbechersystem nach Anspruch 2, wobei der Anschluss (121; 221) für einen Milchschlauch abnehmbar an dem jeweiligen zweiten Hülsenteil (120; 220) befestigt ist.

4. Modulares Melkbechersystem nach einem der vorhergehenden Ansprüche, wobei jeder der ersten (110; 210) oder jeder der zweiten Hülsenteile (120; 220) einen abnehmbaren Anschluss (222) für eine Pulsationsleitung aufweist.

5. Modulares Melkbechersystem nach einem der vorhergehenden Ansprüche, wobei eine Kopplungseinrichtung (130, 140; 230) vorgesehen ist, die eine mechanische Ankopplung und Entkopplung der ersten und der zweiten Hülsenteile unabhängig von Abmessungen der ersten und der zweiten Hülsenteile ermöglicht, wobei insbesondere die Kopplungseinrichtung (130, 140; 230) für eine werkzeuglose Ankopplung und Entkopplung ausgebildet ist.

6. Modulares Melkbechersystem nach einem der vorhergehenden Ansprüche, wobei Dichtungsmittel an einem Kontaktbereich zwischen den ersten Hülsenteilen (110; 210) und den zweiten Hülsenteilen (120; 220) vorgesehen sind, und/oder ein Schutzelement (227) an den ersten Hülsenteilen (110; 210) angebracht oder anbringbar ist, und/oder ein Ballastelement (130) vorgesehen ist, das an den ersten und/oder zweiten Hülsenteilen zur Einstellung des Gewichts der Melkbecherhülse befestigbar ist, und/oder eine Öffnung für einen Lufteinlass (150) an den ersten oder den zweiten Hülsenteilen vorgesehen ist und/oder eine verschließbare Wartungsöffnung (228) in den zweiten Hülsenteilen (120; 220) ausgebildet ist.

7. Modulares Melkbechersystem nach einem der Ansprüche 1 bis 6, wobei die zweiten Hülsenteile (120; 220) mit unterschiedlichen Anschlussanordnungen zur Anbindung an ein Milchleitungssystem und/oder ein Pulsationssystem vorgesehen sind, wobei insbesondere eine Anschlussanordnung (121; 225) zur Anbindung an ein Milchleitungssystem modular ausgebildet ist und an die zweiten Hülsenteile an- und abkoppelbar ist.

8. Modulares Melkbechersystem nach einem der Ansprüche 1 bis 7, wobei die ersten und/oder zweiten Hülsenteile in unterschiedlichen Materialien verfügbar sind.

## Claims

1. Modular teat cup system, comprising
a plurality of first sleeve parts (110, 210), each adapted to insert an elastic teat holder (190; 290), and
a plurality of second sleeve parts (120; 220), each of which can be coupled to each of the first sleeve parts (110, 210) in order to achieve operational readiness and can be uncoupled from the first sleeve parts (110; 210),
wherein a teat cup sleeve (100; 200) can be assembled from one of the first sleeve parts and one of the second sleeve parts,
wherein the first sleeve parts (110; 210) are available with different lengths for adaptation to elastic teat holders (190, 290) of different lengths for different animal species or teat lengths and/or different milking conditions.

2. Modular teat cup system according to claim 1, wherein each of the second sleeve parts (120, 220) has a connection (121, 221) for a milk hose and/or an opening for an outlet end of the elastic teat holders.

3. Modular teat cup system according to claim 2, wherein the connection (121, 221) for a milk hose is removably attached to the respective second sleeve part (120; 220).

4. Modular teat cup system according to one of the preceding claims, wherein each of the first (110; 210) or each of the second sleeve parts (120, 220) comprises a removable connection (222) for a pulsation line.

5. Modular teat cup system according to any of the preceding claims, wherein coupling means (130, 140; 230) are provided for mechanically coupling and decoupling the first and second sleeve parts independently of the dimensions of the first and the second sleeve parts, wherein in particular the coupling means (130, 140; 230) are designed for tool-free coupling and decoupling.

6. Modular teat cup system according to one of the preceding claims, wherein sealing means are provided at a contact region between the first sleeve parts (110; 210) and the second sleeve parts (120; 220), and/or a protective element (227) is attached or attachable to the first sleeve parts (110; 210), and/or a ballast element (130) is provided which is attachable to the first and/or second sleeve parts for adjusting the weight of the teat cup sleeve, and/or an opening for an air inlet (150) is provided on the first or the second sleeve parts, and/or a lockable maintenance opening (228) is formed in the second sleeve parts (120; 220).

7. Modular teat cup system according to any one of claims 1 to 6, wherein the second sleeve parts (120; 220) are provided with different connection arrangements for connection to a milk line system and/or a pulsation system, wherein in particular a connection arrangement (121; 225) for connection to a milk line system is of modular design and can be coupled to and uncoupled from the second sleeve parts.

8. Modular teat cup system according to one of claims 1 to 7, wherein the first and/or second sleeve parts are available in different materials.

## Revendications

1. Système de gobelet trayeur modulaire comprenant une pluralité de premières parties de manchon (110 ; 210), chacune étant conçue pour insérer un logement élastique de trayon (190 ; 290), et une pluralité de secondes parties de manchon (120 ; 220), chacune pouvant être accouplée aux premières parties de manchon respectives (110 ; 210) pour atteindre l'état de fonctionnement et pouvant être désaccouplée de la première partie de manchon (110 ; 210),
dans lequel un manchon de gobelet trayeur (100 ; 200) peut être assemblé à partir de l'une des premières parties de manchon et de l'une des secondes parties de manchon,
dans lequel les premières parties de manchon (110 ; 210) sont disponibles avec des longueurs différentes pour s'adapter à des logements élastiques de trayon de longueurs différentes (190 ; 290) pour différentes espèces animales ou longueurs de trayon et/ou différentes conditions de traite.

2. Système de gobelet trayeur modulaire selon la revendication 1, dans lequel chacune des deuxièmes parties de manchon (120 ; 220) comprend un raccord (121, 221) pour un tuyau à lait et/ou une ouverture pour une extrémité de sortie du logement élastique de trayon.

3. Système de gobelet trayeur modulaire selon la revendication 2, dans lequel le raccord (121 ; 221) pour un tuyau à lait est fixé de manière amovible à la deuxième partie de manchon respective (120 ; 220).

4. Système de gobelet trayeur modulaire selon l'une quelconque des revendications précédentes, dans lequel chacune des premières (110 ; 210) ou chacune des deuxièmes parties de manchon (120 ; 220) comprend un raccord amovible (222) à une ligne de pulsation.

5. Système de gobelet trayeur modulaire selon l'une des revendications précédentes, dans lequel il est prévu un dispositif d'accouplement (130, 140 ; 230) qui permet un accouplement et un désaccouplement mécaniques des premières et des deuxièmes parties de manchon indépendamment des dimensions des premières et des deuxièmes parties de manchon, le dispositif d'accouplement (130, 140 ; 230) étant notamment conçu pour un accouplement et un désaccouplement sans outil.

6. Système de gobelet trayeur modulaire selon l'une des revendications précédentes, dans lequel des moyens d'étanchéité sont prévus sur une zone de contact entre les premières parties de manchon (110 ; 210) et les deuxièmes parties de manchon (120 ; 220), et/ou un élément de protection (227) est fixé aux premières parties de manchon (110 ; 210), et/ou un élément de lestage (130) est prévu, qui peut être fixé sur les premières et/ou les deuxièmes parties de manchon pour ajuster le poids du gobelet trayeur, et/ou une ouverture pour une entrée d'air (150) est prévue sur les premières ou les deuxièmes parties de manchon et/ou une ouverture de maintenance (228) pouvant être fermée est formée dans les deuxièmes parties de manchon (120 ; 220).

7. Système de gobelet trayeur modulaire selon l'une des revendications 1 à 6, dans lequel les deuxièmes parties de manchon (120 ; 220) sont prévues avec différents agencements de raccordement pour le raccordement à un système de conduite de lait et/ou à une ligne de pulsation, un agencement de raccordement (121 ; 225) pour le raccordement à un système de conduite de lait étant notamment de conception modulaire et pouvant être accouplé et désaccouplé des deuxièmes parties de manchon.

8. Système de gobelet trayeur modulaire selon l'une quelconque des revendications 1 à 7, dans lequel les premières et/ou secondes parties de manchon sont disponibles dans des matériaux différents.
